# EUROPÄISCHE PATENTSCHRIFT

(11) **EP 3 488 743 B1**
(45) Veröffentlichungstag und Bekanntmachung des Hinweises auf die Patenterteilung: **06.01.2021**
(21) Anmeldenummer: 18207517.6
(22) Anmeldetag: 21.11.2018
(51) Int. Cl.: A47J 43/046, A47J 43/06, A47J 43/07, A47J 43/08

(54) **MIXER MIT DOPPELTER ANTRIEBSFUNKTION AUF EINER WELLE**
MIXER WITH DUAL DRIVE FUNCTION ON A SHAFT
MÉLANGEUR À FONCTION D'ENTRAÎNEMENT DOUBLE SUR UN ARBRE

(30) Priorität: 27.11.2017 DE 102017221140
(43) Veröffentlichungstag der Anmeldung: 29.05.2019
(73) Patentinhaber: BSH Hausgeräte GmbH, 81739 München (DE)
(72) Erfinder: Koscak, Ales, 6230 Postojna (SI); Uplaznik, Marko, 3312 Prebold (SI); Zilnik, Marko, 1218 Komenda (SI)

(56) Entgegenhaltungen:
- EP-A1- 0 158 032
- WO-A1-2015/028748
- WO-A2-2013/090424

## Beschreibung

### Gebiet der Erfindung

Die Erfindung betrifft einen Mixer, insbesondere zum Mixen von Nahrungsmitteln in haushaltsüblichen Mengen, aufweisend einen Mixersockel, in welchem mindestens ein Antriebsmotor angeordnet ist, und einen krugförmigen Aufsatz, der ein rotierendes Werkzeug aufweist, wobei der Mixersockel und der krugförmige Aufsatz voneinander trennbar ausgestaltet sind, und wobei mindestens eine Antriebswelle des Antriebsmotors aus dem Mixersockel herausgeführt ist und eine erste Kupplungsvorrichtung für eine korrespondierende erste Gegenkupplungsvorrichtung am Boden des krugförmigen Aufsatzes aufweist. Die Erfindung betrifft außerdem einen Mixersockel für einen von dem Mixersockel anbringbaren und davon wieder lösbaren krugförmigen Aufsatz. Schließlich betrifft die Erfindung einen krugförmigen Aufsatz zum wieder-lösbaren Anbringen an einen Mixersockel.

### Hintergrund der Erfindung

Zum Herstellen von Nahrungsmittelgerichten mit Hilfe einer gattungsgemäßen Küchenmaschine, die zum Häckseln von Gemüse und zum Mischen oder zum Zerkleinern von Eis geeignet ist, ist es bekannt, während des Mixvorgangs weitere Zutaten zum Mixerinhalt dazuzugeben. Die Kräfte und die Unwuchten, die auf das rotierende Messer einer Küchenmaschine wirken, erfordern eine recht stabile Lagerung. In der Regel sind bekannte Küchenmixer daher mit einem am Boden des krugförmigen Mixers angeordneten rotierenden Messer ausgestattet, welches einseitig an einem kurzen Wellenstumpf angeordnet ist. Ein so aufgebauter Mixer kann in Mixportionsgrößen in haushaltsüblichen Mengen 1 kW und mehr mechanische Leistung in das zu mixende Nahrungsmittel einbringen.

Mit einem am Boden angeordneten rotierenden Messer ist es unpraktisch, beispielsweise Gemüse mit einem rotierenden Scheibenmesser zu schneiden, da unterhalb des Scheibenmessers kein Platz zur Aufnahme der Gemüsescheiben vorhanden ist. Hierzu ist es auch bekannt, den Wellenstumpf zu verlängern, so dass eine Schneidscheibe mit viel Raum unterhalb der Schneidscheibe ausgestattet ist. Die verlängerte Welle ist aber empfindlich gegenüber Unwuchten. Auf-grund der Hebelwirkung kann eine solche Schneidscheibe weniger mechanische Leistung abgeben, wenn keine Vorkehrungen zur mechanisch hochstabilen Lagerung der Schneidscheibe vorgesehen sind.

Ein besonderer Fall ist gegeben, wenn ein Gericht länger gerührt oder gemixt werden soll und gleichzeitig in das gerührte oder gemixte Gericht weitere Zutaten unter Zerkleinerung eingebracht werden sollen. Als Beispiel sei genannt, das Herstellen von Eis aus Wassereis und einer Eismischung, oder aus gefrorenen Früchten und Eischnee, in das geraspelte Schokolade eingebracht werden soll oder aber ein Risotto, das längere Zeit in der Wärme gerührt werden muss, und in das gleichzeitig zerkleinertes Gemüse oder Pilze eingebracht werden sollen.

Ein auf einer gemeinsamen Welle angeordneter Rührer oder Mixer und eine Schneidscheibe müssten stets bei gleicher Umdrehungsgeschwindigkeit gedreht werden. Mixen und Schneiden erfordern in der Regel eine unterschiedliche Umdrehungsgeschwindigkeit, so dass ein gleichzeitiger Einsatz von Mixen und Schneiden auf einer gemeinsamen Welle in vielen Fällen nicht möglich ist oder zu unerwünschten Ergebnissen führt.

### Der Erfindung zugrundeliegende Aufgabe

Aufgabe der Erfindung ist es daher, einen verbesserten Mixer zur Verfügung zu stellen. Insbesondere soll ein Mixer zur Verfügung gestellt werden, mit dem gleichzeitig gerührt oder gemixt werden kann und Nahrungsmittel zerkleinert werden können. Der Erfindung liegt außerdem die Aufgabe zugrunde, einen verbesserten Mixersockel und einen verbesserten krugförmigen Aufsatz für einen Mixer bereitzustellen.

### Erfindungsgemäße Lösung

Die Bezugszeichen in sämtlichen Ansprüchen haben keine einschränkende Wirkung, sondern sollen lediglich deren Lesbarkeit verbessern.

Die der Erfindung zu Grunde liegende Aufgabe wird durch einen eingangs erwähnten Mixer gelöst, bei dem vorgesehen ist, dass eine zweite Kupplungsvorrichtung für eine korrespondierende zweite Gegenkupplungsvorrichtung des krugförmigen Ansatzes am Mixersockel angeordnet ist. Im Sinne der vorliegenden Erfindung bedeutet krugförmig, dass der Aufsatz als ein oben offenes Gefäß augebildet ist.

Die Erfindungsaufgabe wird außerdem durch einen Mixersockel für einen an dem Mixersockel anbringbaren und davon wieder lösbaren krugförmigen Aufsatz, der in seinem Inneren ein rotierendes erstes Werkzeug aufweist, insbesondere zum Mixen von Nahrungsmitteln in haushaltsüblichen Mengen, wobei in dem Mixersockel mindestens ein Antriebsmotor angeordnet ist, mindestens eine Antriebswelle des Antriebsmotors aus dem Mixersockel herausgeführt ist und der Mixersockel eine erste Kupplungsvorrichtung für eine korrespondierende erste Gegenkupplungsvorrichtung am Boden des krugförmigen Aufsatzes aufweist. Der Mixersockel weist außerdem eine zweite Kupplungsvorrichtung für eine korrespondierende zweite Gegenkupplungsvorrichtung des Ansatzes auf.

Schließlich wird die Erfindungsaufgabe auch durch einen krugförmigen Aufsatz zum wieder-lösbaren Anbringen an einen Mixersockel, insbesondere zum Mixen von Nahrungsmitteln in haushaltsüblichen Mengen, gelöst, wobei der Aufsatz im Inneren ein rotierendes erstes Werkzeug aufweist sowie eine erste Gegenkupplungsvorrichtung (8) für eine korrespondierende erste Kupplungsvorrichtung (7) des Mixersockels (2). Außerdem weist der Aufsatz eine zweite Gegenkupplungsvorrichtung für eine korrespondierende zweite Kupplungsvorrichtung des Mixersockels auf.

Nach dem Gedanken der Erfindung ist also vorgesehen, dass ein Mixer mehr als einen Antrieb, bevorzugt einen doppelten Antrieb aufweist. Durch den mehr als einen oder doppelten Antrieb kann auch mehr als ein rotierendes Werkzeug, z. B. ein Mixmesserwerkzeug oder ein Mixschaufelwerkzeug als erstes Werkzeug und ein Scheibenmesser als zweites Werkzeug, gleichzeitig angetrieben werden.

Der bevorzugte Mixer ist ein Standmixer. Der Mixer kann aber zum Beispiel auch eine Küchenmaschine sein, an die der Aufsatz in Form eines Mixgefäßes wieder-lösbar ankuppelbar ist. Der typische Aufsatz besteht, zumindest im Wesentlichen aus Glas oder Kunststoff. Er weist vorzugsweise einen Henkel auf, mit dem ein Benutzer den Aufsatz angreifen kann.

Mit dem erfindungsgemäßen Mixer, dem erfindungsgemäßen Mixersockel und dem erfindungsgemäßen krugförmigen Aufsatz lässt sich das Spektrum möglicher Anwendungen des Mixers vorteilhafterweise erweitern. Insbesondere kann gleichzeitig gerührt oder gemixt und Nahrungsmittel zerkleinert werden.

### Bevorzugte Ausgestaltungen der Erfindung

Vorteilhafte Aus- und Weiterbildungen, welche einzeln oder in Kombination miteinander eingesetzt werden können, sind Gegenstand der abhängigen Ansprüche und der nachfolgenden Beschreibung.

Der Mixer kann eine doppelte Antriebsfunktion auf einer Welle aufweisen, wobei beide Antriebsfunktionen unterschiedliche Geschwindigkeiten aufweisen. Diese doppelte Antriebsfunktion kann über einen koaxialen Antrieb mit zwei Kupplungen erfolgen, die ineinander oder übereinander angeordnet sind. Dabei kann es vorgesehen sein, dass sich die erste Kupplungsvorrichtung und auch die zweite Kupplungsvorrichtung koaxial um eine gemeinsame Achse drehen. Dies kann durch zwei unabhängig voneinander angetriebene Wellen erfolgen, aber auch durch zwei auf einer Achse sitzende Wellen, die beispielsweise miteinander durch ein Planetengetriebe oder ein anderes Getriebe miteinander verbunden sind.

Bei dem Getriebe kann es sich um ein Wechselgetriebe handeln, wobei in bevorzugter Weise mehr als ein Planetengetriebe auf einer Welle angeordnet sind, wobei das Sonnenrad als Antriebsrad und die Zentren der Planetenräder als Abtrieb für eine zweite Wellen dienen. Dabei können verschiedene Radienverhältnisse von Sonnenrad und Planetenrädern untereinander vorliegen, wobei ein Antrieb mit durch koaxiales Verschieben der Antriebswelle mit verschiedenen Sonnenrädern in Eingriff kommt. Es ist aber auch möglich, dass ein herkömmliches Zahnradgetriebe mit parallel verlaufenden Getriebewellen verschiedene koaxiale Wellen antreibt. Dabei ist es je nach Ausgestaltung des erfindungsgemäßen Mixers möglich, dass die erste Kupplungsvorrichtung und auch die zweite Kupplungsvorrichtung über ein Getriebe miteinander verbunden sind.

Vorteilhaft ist es, wenn die der ersten Kupplungsvorrichtung zugeordnete Antriebswelle und eine der zweiten Kupplungsvorrichtung zugeordnete Antriebswelle mit unterschiedlicher Umdrehungsgeschwindigkeit rotieren. Auf diese Weise lässt sich gleichzeitig beispielsweise ein schnelles Schneiden mit einem Scheibenmesser und ein langsames Rühren oder Mixen mit einem rotierenden Mixmesser erreichen. Dazu ist es von besonderem Vorteil, wenn die Antriebsgeschwindigkeiten der beiden Antriebswellen gemeinsam oder getrennt voneinander einstellbar sind.

Je nach Ausgestaltung des Mixers kann es vorgesehen sein, dass die erste Kupplungsvorrichtung und auch die zweite Kupplungsvorrichtung durch denselben Antriebsmotor angetrieben werden.

Um eine einfache Kupplung zwischen dem Mixersockel und dem krugförmigen Aufsatz des Mixers herzustellen, ist es in Ausgestaltung des Mixers vorgesehen, dass die erste Kupplungsvorrichtung und auch die zweite Kupplungsvorrichtung je eine auf einem Umfang eines Zylinders eingeformte Kronradverzahnung aufweisen. Diese auf einem Umfang eines Zylinders eingeformte Kronradverzahnung erinnert an ein gattungsgemäßes Zahnrad, bei dem ein Teil des Umfangs der Zähne miteinander verbunden ist. Das Zahnrad weist also neben Senken und Höhen auch einen durchgehenden zylindrischen Teil auf, wobei der durchgehende zylindrische Teil des Zahnrades unten liegt und die Senken und Höhen eines liegenden Zahnrades nach oben weisen.

Es ist vorteilhaft, wenn zwei Vorrichtungen, wie Scheibenmesser, rotierendes Sternmesser oder Mischvorrichtung in Form eines Propellers in unterschiedlicher Höhe innerhalb des krugförmigen Aufsatzes angeordnet sind. Das bevorzugte erste Werkzeug weist ein oder mehrere Messer auf, um Mixgut in dem Aufsatz des Mixers zu zerkleinern. Das bevorzugte erste Werkzeug ist im Inneren des Aufsatzes in der Nähe des Bodens des Aufsatzes angeordnet. Das zweite Werkzeug weist vorzugsweise ebenfalls ein oder mehrere Messer auf, zum Beispiel zum Schneiden von Scheiben. Das bevorzugte zweite Werkzeug ist in der Nähe der oberen Öffnung des Gefäßes, also in Randnähe angeordnet. Dabei ist in Ausgestaltung der Erfindung vorgesehen, dass eine erste Gegenkupplungsvorrichtung innerhalb des krugförmigen Aufsatzes mit einem rotierenden ersten Werkzeug, beispielsweise ein Sternmesser, oder Mischer, beispielsweise in Propellerform, in Bodennähe des krugförmigen Aufsatzes verbunden ist und dass eine zweite Gegenkupplungsvorrichtung mit einem rotierenden zweiten Werkzeug, beispielsweise ein Scheibenmesser, in Randnähe des krugförmigen Aufsatzes verbunden ist.

Je nach Einsatzart rotiert das untere erste Werkzeug, z. B. ein Sternmesser oder ein propellerförmiger Mischer, langsamer und das obere zweite Werkzeug, z. B. ein Scheibenmesser, schneller. Dabei kann vorgesehen sein, dass sich das rotierende erste Werkzeug mit niedrigerer Umdrehungsgeschwindigkeit dreht als das zweite Werkzeug.

Um die Empfindlichkeit gegenüber Unwuchten oder gegenüber einseitiger Belastung zu verringern, kann in Ausgestaltung der Erfindung vorgesehen sein, dass eine innerhalb des krugförmigen Aufsatzes vom Boden bis zur Randnähe erstreckende Welle durch ein Lager gelagert ist, welches selbst in einem Stabilierungsgestänge innerhalb des krugförmigen Aufsatzes aufgenommen ist.

### Kurzbeschreibung der Zeichnungen

Weitere vorteilhafte Ausgestaltungen werden nachfolgend anhand mehrerer in den Zeichnungen dargestellten Ausführungsbeispielen, auf welche die Erfindung jedoch nicht beschränkt ist, näher beschrieben.

Es zeigt schematisch:
- Figur 1: einen erfindungsgemäßen Mixer bestehend aus einem Mixersockel mit Antriebsmotor und einem krugförmigen Aufsatz, Mixersockel und krugförmiger Aufsatz ist aufgeschnitten dargestellt,
- Figur 2: ein Mixersockel mit zwei konzentrischen Kupplungsvorrichtungen, und
- Figur 3: ein krugförmiger Aufsatz des erfindungsgemäßen Mixers mit Blick auf die zwei innenliegenden Gegenkupplungsvorrichtungen.

### Detaillierte Beschreibung von Ausführungen der Erfindung

Bei der nachfolgenden Beschreibung von bevorzugten Ausführungsformen der vorliegenden Erfindung bezeichnen gleiche Bezugszeichen gleiche oder vergleichbare Komponenten.

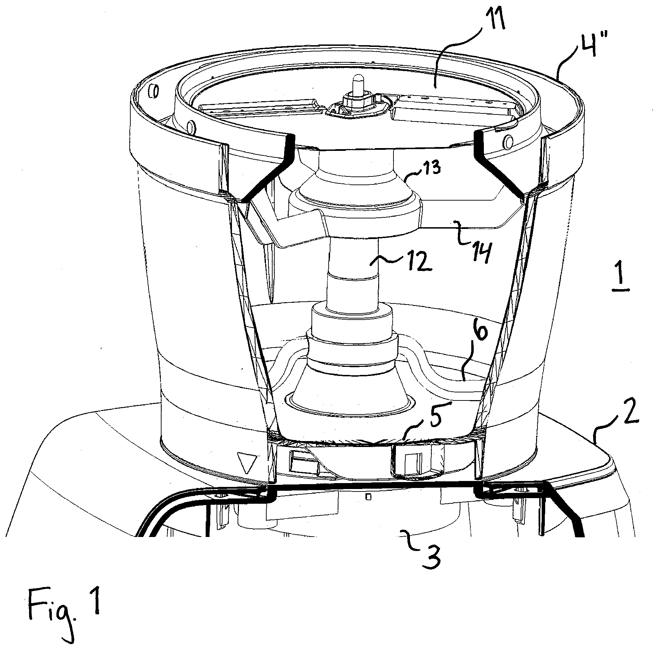

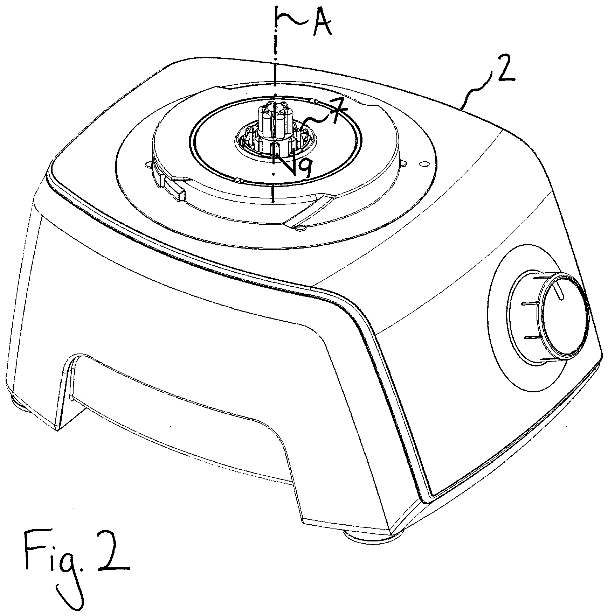

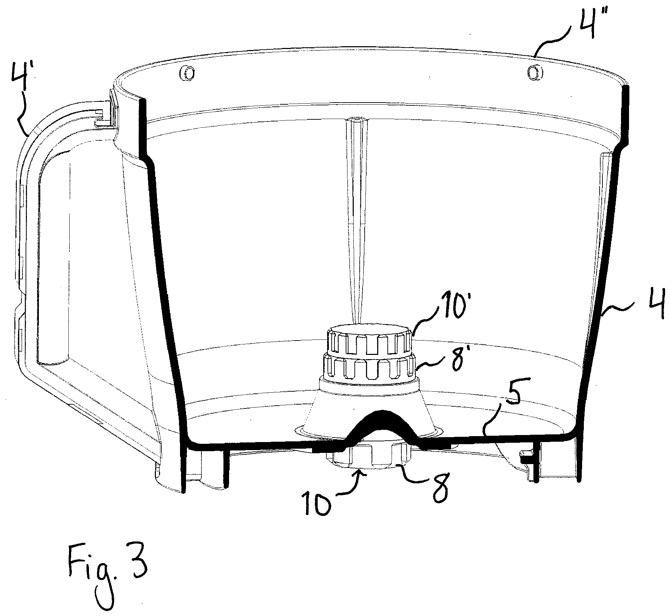

In Figur 1 ist ein erfindungsgemäßer Mixer 1 bestehend aus einem Mixersockel 2 mit Antriebsmotor 3 und einem krugförmigen Aufsatz 4 in teilweise aufgeschnittener Ansicht dargestellt. Dabei ist der Antriebsmotor 3 innerhalb des Mixersockels 2 angeordnet und ragt mit einer Antriebswelle aus dem Mixersockel 2 heraus, was in dieser Darstellung durch den krugförmigen Aufsatz 4 verdeckt ist. Nach dem Gedanken der Erfindung ist es vorgesehen, dass mindestens eine Antriebswelle des Antriebsmotors 3 aus dem Mixersockel 2 herausgeführt ist und eine erste Kupplungsvorrichtung 7 (Figur 2) aufweist, die zum Eingriff in eine korrespondierende erste Gegenkupplungsvorrichtung 8 (Figur 3) am Boden 5 des krugförmigen Aufsatzes 4 vor-gesehen ist. Des Weiteren ist vorgesehen, dass eine zweite Kupplungsvorrichtung 9 (Figur 2) für eine korrespondierende, zweite Gegenkupplungsvorrichtung 10 des krugförmigen Ansatzes 4 am Mixersockel 2 angeordnet ist.

Durch die Kupplungsvorrichtungen 7 kann ein im krugförmigen Aufsatz 4 dem Boden 5 nahes erstes Werkzeug 6, beispielsweise ein Sternmesser, mit einer ersten, z. B. niedrigeren Geschwindigkeit betrieben werden, und gleichzeitig kann durch die Kupplungsvorrichtung 9 ein im krugförmigen Aufsatz 4 dem Rand 4" nahes zweites Werkzeug (11), beispielsweise ein Scheibenmesser, mit einer zweiten, z. B. höheren Umdrehungsgeschwindigkeit betrieben werden. Auf die exakte Umdrehungsgeschwindigkeit der Werkzeuge kommt es hier nicht an, wichtig ist jedoch, dass der Geschwindigkeitsunterschied so gewählt werden kann, dass für die Nutzung des unteren rotierenden ersten Werkzeugs 6 und für die Nutzung des oberen zweiten Werkzeugs 11 die jeweils angemessene Geschwindigkeit gewählt werden kann. Innerhalb des krugförmigen Aufsatzes ist eine Welle 12 vorhanden, welche das obere zweite Werkzeug 11 antreibt. Diese Welle ist in einem Lager 13 gelagert. Das Lager 13 seinerseits in einem Stabilisierungsgestänge 14, hier in Form von drei Armen, die mit dem Deckel verbunden sind, aufgenommen. Durch diese zusätzliche Lagerung ist die Welle 12 dazu in der Lage die Unwucht und die einseitige Kraftbeanspruchung beim Häckseln oder Scheibenschneiden aufzunehmen ohne, dass die Unwucht das Werkzeug aus seiner Verankerung reißt.

In Figur 2 ist ein Blick auf den unteren Mixersockel 2 des erfindungsgemäßen Mixers 1 dargestellt. Aus dem Mixersockel 2 ragen zwei konzentrische Kupplungsvorrichtungen 7 und 9 heraus, die mit unterschiedlicher Umdrehungsgeschwindigkeit um eine gemeinsame Achse A drehen. In dem hier dargestellten Mixersockel 2 rotiert die obere, erste Kupplungsvorrichtung 7 mit einer Verzahnung, die für den Antrieb eines rotierenden ersten Werkzeugs 6 mit niedrigerer Geschwindigkeit vorgesehen ist, langsamer als die untere, zweite Kupplungsvorrichtung 9, ebenfalls mit einer verzahnung, die für den Antrieb eines rotierenden zweiten Werkzeugs 10 mit höherer Geschwindigkeit vorgesehen ist. Bei den Verzahnungen kann es sich um einfache Zahnräder handeln, Zahnwellen oder um Wellenstümpfe, in die eine auf einem Umfang eines Zylinders eingeformte Kronradverzahnung eingebracht ist.

In Figur 3 ist schließlich ein aufgeschnittener krugförmiger Aufsatz 4 mit Henkel 4' zum Greifen mit der menschlichen Hand dargestellt, in welchem sowohl ein unteres erstes Werkzeug 6 und die Welle 12 aus Figur 1 entfernt ist. Dadurch wird der Blick auf innere Kupplungsvorrichtungen 8' und 10' frei, die zur Kupplung mit dem unteren ersten Werkzeug 6 und der Welle 12 vorgesehen sind. Die rotierenden Kupplungen sind über eine hier nicht gezeigte Welle miteinander verbunden, die über einen Simmering abgedichtet ist.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausführungsformen von Bedeutung sein.

### Bezugszeichenliste

- 1: Mixer
- 2: Mixersockel
- 3: Antriebsmotor
- 4: krugförmiger Aufsatz
- 4': Henkel
- 4": Rand
- 5: Boden
- 6: Erstes Werkzeug
- 7: Erste Kupplungsvorrichtung
- 8: Erste Gegenkupplungsvorrichtung
- 8': Erste Innere Kupplungsvorrichtung
- 9: Zweite Kupplungsvorrichtung
- 10: Zweite Gegenkupplungsvorrichtung
- 10': Zweite Innere Kupplungsvorrichtung
- 11: Zweites Werkzeug
- 12: Welle
- 13: Lager
- 14: Stabilisierungsgestänge
- A: Achse

## Patentansprüche

1. Mixer (1), insbesondere zum Mixen von Nahrungsmitteln in haushaltsüblichen Mengen, aufweisend
- einen Mixersockel (2), in welchem mindestens ein Antriebsmotor (3) angeordnet ist, und
- einen krugförmigen Aufsatz (4), der ein rotierendes erstes Werkzeug (6) aufweist, wobei der Mixersockel (2) und der krugförmige Aufsatz (4) voneinander trennbar ausgestaltet sind, und
wobei mindestens eine Antriebswelle des Antriebsmotors (3) aus dem Mixersockel (2) herausgeführt ist und eine erste Kupplungsvorrichtung (7) für eine korrespondierende erste Gegenkupplungsvorrichtung (8) am Boden (5) des krugförmigen Aufsatzes (4) aufweist, wobei eine zweite Kupplungsvorrichtung (9) für eine korrespondierende zweite Gegenkupplungsvorrichtung (10) des krugförmigen Ansatzes (4) am Mixersockel (2) angeordnet ist, **dadurch gekennzeichnet, dass** die der ersten Kupplungsvorrichtung (7) zugeordnete Antriebswelle und eine der zweiten Kupplungsvorrichtung (9) zugeordnete Antriebswelle gleichzeitig mit unterschiedlicher Umdrehungsgeschwindigkeit rotieren

2. Mixer nach Anspruch 1, **dadurch gekennzeichnet, dass** sich die erste Kupplungsvorrichtung (7) und auch die zweite Kupplungsvorrichtung (9) koaxial um eine gemeinsame Achse (A) drehen.

3. Mixer nach einem der Ansprüche 1 oder 2, **dadurch gekennzeichnet, dass** die erste Kupplungsvorrichtung (7) und auch die zweite Kupplungsvorrichtung (9) über ein Getriebe miteinander verbunden sind.

4. Mixer nach einem der Ansprüche 1 bis 3, **dadurch gekennzeichnet, dass** die Antriebsgeschwindigkeiten der beiden Antriebswellen gemeinsam oder getrennt voneinander einstellbar sind.

5. Mixer nach Anspruch 3, **dadurch gekennzeichnet, dass** die erste Kupplungsvorrichtung (7) und auch die zweite Kupplungsvorrichtung (9) durch denselben Antriebsmotor (3) angetrieben werden.

6. Mixer nach einem der Ansprüche 1 bis 5, **dadurch gekennzeichnet, dass** die erste Kupplungsvorrichtung (7) und auch die zweite Kupplungsvorrichtung (9) je eine auf einem Umfang eines Zylinders eingeformte Kronradverzahnung aufweisen.

7. Mixer nach einem der Ansprüche 1 bis 6, **dadurch gekennzeichnet, dass** eine erste Gegenkupplungsvorrichtung (8) innerhalb des krugförmigen Aufsatzes (4) mit einem rotierenden ersten Werkzeug (6) oder Mischer in Bodennähe des krugförmigen Aufsatzes (4) verbunden ist und dass eine zweite Gegenkupplungsvorrichtung (10) mit einem rotierenden zweiten Werkzeug (11) in Randnähe des krugförmigen Aufsatzes (4) verbunden ist.

8. Mixer nach Anspruch 7, **dadurch gekennzeichnet, dass** sich das rotierende erste Werkzeug (6) oder sich der rotierende Mischer in Bodennähe des krugförmigen Aufsatzes (4) mit niedrigerer Umdrehungsgeschwindigkeit dreht als das in Randnähe rotierende zweiten Werkzeug (11).

9. Mixer nach Anspruch 8, **dadurch gekennzeichnet, dass** eine innerhalb des krugförmigen Aufsatzes (4) vom Boden (5) bis zur Randnähe erstreckende Welle (12) durch ein Lager (13) gelagert ist, welches selbst in einem Stabilierungsgestänge (14) innerhalb des krugförmigen Aufsatzes (4) aufgenommen ist.

10. Mixersockel (2) mit einem an dem Mixersockel (2) anbringbaren und davon wieder lösbaren krugförmigen Aufsatz (4), der in seinem Inneren ein rotierendes erstes Werkzeug (6) aufweist, insbesondere zum Mixen von Nahrungsmitteln in haushaltsüblichen Mengen, wobei in dem Mixersockel (2) mindestens ein Antriebsmotor (3) angeordnet ist, mindestens eine Antriebswelle des Antriebsmotors (3) aus dem Mixersockel (2) herausgeführt ist und der Mixersockel eine erste Kupplungsvorrichtung (7) für eine korrespondierende erste Gegenkupplungsvorrichtung (8) am Boden (5) des krugförmigen Aufsatzes (4) aufweist, wobei der Mixersockel (2) eine zweite Kupplungsvorrichtung (9) für eine korrespondierende zweite Gegenkupplungsvorrichtung (10) des Ansatzes (4) aufweist, **dadurch gekennzeichnet, dass** die der ersten Kupplungsvorrichtung (7) zugeordnete Antriebswelle und eine der zweiten Kupplungsvorrichtung (9) zugeordnete Antriebswelle gleichzeitig mit unterschiedlicher Umdrehungsgeschwindigkeit rotieren

## Claims

1. Mixer (1), in particular for mixing food in conventional household quantities, having
- a mixer base (2), in which at least one drive motor (3) is arranged, and
- a jug-shaped attachment (4), which has a rotating first tool (6), wherein the mixer base (2) and the jug-shaped attachment (4) are designed to be separable from one another, and
wherein at least one drive shaft of the drive motor (3) is guided out of the mixer base (2) and has a first coupling device (7) for a corresponding first counter coupling device (8) on the base (5) of the jug-shaped attachment (4), wherein a second coupling device (9) for a corresponding second counter coupling device (10) of the jug-shaped attachment (4) is arranged on the mixer base (2), **characterised in that** the drive shaft assigned to the first coupling device (7) and a drive shaft assigned to the second coupling device (9) rotate simultaneously with a different rotational speed.

2. Mixer according to claim 1, **characterised in that** the first coupling device (7) and also the second coupling device (9) rotate coaxially around a shared axis (A).

3. Mixer according to one of claims 1 or 2, **characterised in that** the first coupling device (7) and also the second coupling device (9) are connected to one another by way of a gear.

4. Mixer according to one of claims 1 to 3, **characterised in that** the drive speeds of the two drive shafts can be set collectively or separately from one another.

5. Mixer according to claim 3, **characterised in that** the first coupling device (7) and also the second coupling device (9) are driven by the same drive motor (3).

6. Mixer according to one of claims 1 to 5, **characterised in that** the first coupling device (7) and also the second coupling device (9) each have a crown wheel toothing moulded on a periphery of a cylinder.

7. Mixer according to one of claims 1 to 6, **characterised in that** a first counter coupling device (8) within the jug-shaped attachment (4) is connected to a rotating first tool (6) or mixer close to the base of the jug-shaped attachment (4), and that a second counter coupling device (10) is connected to a rotating second tool (11) close to the sides of the jug-shaped attachment (4).

8. Mixer according to claim 7, **characterised in that** the rotating first tool (6) or the rotating mixer close to the base of the jug-shaped projection (4) rotates at a lower rotational speed than the second tool (11) which rotates close to the sides.

9. Mixer according to claim 8, **characterised in that** a shaft (12) which extends within the jug-shaped attachment (4) from the base (5) to close to the sides is mounted by a bearing (13), which is itself received in a stabilisation rod (14) within the jug-shaped attachment (4).

10. Mixer base (2) with a jug-shaped attachment (4) which can be attached to the mixer base (2) and then detached again therefrom, which has a rotating first tool (6) in its interior, in particular for mixing food in conventional household quantities, wherein at least one drive motor (3) is arranged in the mixer base (2), at least one drive shaft of the drive motor (3) is guided out of the mixer base (2) and the mixer base has a first coupling device (7) for a corresponding first counter coupling device (8) on the base (5) of the jug-shaped attachment (4), wherein the mixer base (2) has a second coupling device (9) for a corresponding second counter coupling device (10) of the attachment (4), **characterised in that** the drive shaft assigned to the first coupling device (7) and a drive shaft assigned to the second coupling device (9) rotate simultaneously at a different revolution speed.

## Revendications

1. Mixeur (1), notamment destiné à mixer des aliments en quantités domestiques usuelles, présentant
- un socle de mixeur (2) dans lequel est disposé au moins un moteur d'entraînement (3),
et
- une partie rapportée (4) en forme de pot, laquelle comprend un premier outil rotatif (6), le socle de mixeur (2) et la partie rapportée (4) en forme de pot étant conçus de manière séparable l'un de l'autre, et
dans lequel au moins un arbre d'entraînement du moteur d'entraînement (3) est conduit hors du socle de mixeur (2) et comprend un premier dispositif d'accouplement (7) pour un premier dispositif de contre-accouplement (8) correspondant situé au fond (5) de la partie rapportée (4) en forme de pot, dans lequel un deuxième dispositif d'accouplement (9) est disposé sur le socle de mixeur (2) pour un deuxième dispositif de contre-accouplement (10) correspondant de la partie rapportée (4) en forme de pot, **caractérisé en ce que** l'arbre d'entraînement associé au premier dispositif d'accouplement (7) et un arbre d'entraînement associé au deuxième dispositif d'accouplement (9) sont simultanément en rotation avec une vitesse de rotation différente.

2. Mixeur selon la revendication 1, **caractérisé en ce que** le premier dispositif d'accouplement (7) et aussi le deuxième dispositif d'accouplement (9) tournent coaxialement autour d'un axe commun (A).

3. Mixeur selon l'une quelconque des revendications 1 ou 2, **caractérisé en ce que** le premier dispositif d'accouplement (7) et aussi le deuxième dispositif d'accouplement (9) sont reliés entre eux par l'intermédiaire d'un engrenage.

4. Mixeur selon l'une quelconque des revendications 1 à 3, **caractérisé en ce que** les vitesses d'entraînement des deux arbres d'entraînement sont réglables de manière commune ou séparées l'une de l'autre.

5. Mixeur selon la revendication 3, **caractérisé en ce que** le premier dispositif d'accouplement (7) et aussi le deuxième dispositif d'accouplement (9) sont entraînés par le même moteur d'entraînement (3).

6. Mixeur selon l'une quelconque des revendications 1 à 5, **caractérisé en ce que** le premier dispositif d'accouplement (7) et aussi le deuxième dispositif d'accouplement (9) comprennent respectivement une denture de couronne formée sur une circonférence d'un cylindre.

7. Mixeur selon l'une quelconque des revendications 1 à 6, **caractérisé en ce qu'**un premier dispositif de contre-accouplement (8) situé à l'intérieur de la partie rapportée (4) en forme de pot est relié à un premier outil rotatif (6) ou mélangeur situé à proximité du fond de la partie rapportée (4) en forme de pot, et **en ce qu'**un deuxième dispositif de contre-accouplement (10) est relié à un deuxième outil rotatif (11) situé à proximité du bord de la partie rapportée (4) en forme de pot.

8. Mixeur selon la revendication 7, **caractérisé en ce que** le premier outil rotatif (6) ou mélangeur rotatif à proximité du fond de la partie rapportée (4) en forme de pot tourne avec une vitesse de rotation plus basse que le deuxième outil rotatif (11) à proximité du bord.

9. Mixeur selon la revendication 8, **caractérisé en ce qu'**un arbre (12) s'étendant à l'intérieur de la partie rapportée (4) en forme de pot du fond (5) jusqu'à proximité du bord est logé au moyen d'un palier (13) qui est lui-même logé dans des tiges de stabilisation (14) situées à l'intérieur de la partie rapportée (4) en forme de pot.

10. Socle de mixeur (2) comprenant une partie rapportée (4) en forme de pot pouvant être posée sur le socle de mixeur (2) et en être de nouveau retirée, laquelle comprend dans son intérieur un premier outil rotatif (6), notamment destiné à mixer des aliments en quantités domestiques usuelles, dans lequel au moins un moteur d'entraînement (3) est disposé dans le socle de mixeur (2), dans lequel au moins un arbre d'entraînement du moteur d'entraînement (3) est conduit hors du socle de mixeur (2), et dans lequel le socle de mixeur comprend un premier dispositif d'accouplement (7) pour un premier dispositif de contre-accouplement (8) correspondant situé au fond (5) de la partie rapportée (4) en forme de pot, dans lequel le socle de mixeur (2) comprend un deuxième dispositif d'accouplement (9) pour un deuxième dispositif de contre-accouplement (10) correspondant de la partie rapportée (4), **caractérisé en ce que** l'arbre d'entraînement associé au premier dispositif d'accouplement (7) et un arbre d'entraînement associé au deuxième dispositif d'accouplement (9) sont simultanément en rotation avec une vitesse de rotation différente.
